# EUROPEAN PATENT APPLICATION

(11) **EP 4 834 611 A1**
(43) Date of publication of application: **04.11.2026**
(21) Application number: 24921578.1
(22) Date of filing: 30.10.2024
(51) Int. Cl.: B60K 1/02

(54) **DUAL-MODE ELECTRIC DRIVE SYSTEM AND VEHICLE**

(30) Priority: 04.02.2024 CN 202410158142
(71) Applicant: Yutong Bus Co., Ltd., Zhengzhou, Henan 450061 (CN)
(72) Inventor: DONG, Weichao, Zhengzhou, Henan 450061 (CN); XIE, Fuke, Zhengzhou, Henan 450061 (CN); LI, Liang, Zhengzhou, Henan 450061 (CN); HE, Wenbo, Zhengzhou, Henan 450061 (CN); WU, Xiaoling, Zhengzhou, Henan 450061 (CN); WANG, Zhanbin, Zhengzhou, Henan 450061 (CN); WANG, Huizhong, Zhengzhou, Henan 450061 (CN)
(74) Representative: Petraz, Gilberto Luigi
(86) International application number: PCT/CN2024/128548
(87) International publication number: WO 2025/161554

(57) **Abstract**

The present invention relates to the field of vehicle power arrangement, and in particular to a dual-mode electric drive system and a vehicle. A first motor and a second motor in the dual-mode electric drive system are connected to an output end by means of gear transmission structures, and a clutch is provided between the first motor or the second motor and the output end so as to selectively engage the first motor or the second motor with the dual-mode electric drive system. When a vehicle is in an operating condition of a lower power demand, one of the motors can be disengaged from the dual-mode electric drive system by means of the clutch, so that only one motor is used for driving, which helps to keep the motor at relatively high output power, thus solving the problem in the prior art that both motors in a dual-motor electric drive system outputting power leads to low output power of every single motor, and accordingly the low output power of the two motors leads to a decrease in motor efficiency when the vehicle is in an operating condition of a lower power demand.

## Description

### FIELD OF TECHNOLOGY

The present invention relates to the field of vehicle power arrangement, and in particular to a dual-mode electric drive system and a vehicle.

### BACKGROUND

With the advancement of energy conservation and emission reduction, new energy vehicles, especially pure electric vehicles, are becoming increasingly popular, resulting in the emergence of various powertrain layouts. For example, Chinese Utility Model Patent with publication number CN211000771U and publication date July 14, 2020 discloses a dual-motor electric drive axle with a single-speed parallel shaft output. This electric drive axle includes a first motor and a second motor, which respectively transmit output power to an output end by means of a two-stage gear transmission structure including a plurality of gears. The output end is integrally provided with a differential and an output gear, and is connected to the left and right half shafts of the vehicle by means of the differential to drive the wheels. The first motor and the second motor are arranged in mirror symmetry with respect to an axis of the two half shafts.

In the above technical solution, the two motors are of the same model and are both connected inside the electric drive axle. Both of the two motors are required to operate, and the output power of each motor is equal to half of the power required for the vehicle to move forward. When the vehicle is in an operating condition with a low power and torque demand, such as slow starting, gradual acceleration, or climbing gentle slopes, the power required for the vehicle to move forward is relatively low, resulting in each motor needing to output even less torque. At this time, the motor operates at lower power, which in turn leads to low motor efficiency. In addition, since both of the two motors are connected to the vehicle half shafts by means of the differential, power distribution to the vehicle half shafts is accomplished by the differential, making it impossible to individually or precisely control a single vehicle half shaft.

### SUMMARY

An objective of the present invention is to provide a dual-mode electric drive system to solve the problem in the prior art that both motors in a dual-motor electric drive system outputting power leads to low output power of every single motor, and accordingly the low output power of the two motors leads to a decrease in motor efficiency when a vehicle is in an operating condition of a lower power demand. Another objective of the present invention is to provide a vehicle to solve the aforesaid problem.

To achieve the above objective, the dual-mode electric drive system of the present invention adopts the following technical solution:
A dual-mode electric drive system includes a first motor and a second motor. The first motor and the second motor are connected to an output end by means of gear transmission structures, and the output end includes two vehicle half shafts and a differential connected between the two vehicle half shafts. A clutch is provided between the first motor or the second motor and the output end so as to selectively engage the first motor or the second motor with the dual-mode electric drive system.

Further, the gear transmission structures include a first gear transmission structure connected to the first motor and a second gear transmission structure connected to the second motor. The first gear transmission structure includes a first output gear located at a tail end. The second gear transmission structure includes a second output gear located at a tail end. One of the first output gear and the second output gear is arranged on the vehicle half shaft, and the other is arranged on a housing of the differential.

Further, one of the first gear transmission structure and the second gear transmission structure is connected to the differential, and the other is provided with the clutch.

Further, the first motor and the second motor are both located on a front side or a rear side of the two vehicle half shafts.

Further, output shafts of the first motor and the second motor are arranged parallel to the vehicle half shafts.

Further, the first motor and the second motor are arranged coaxially.

Further, both the first gear transmission structure and the second gear transmission structure are of two-stage transmission.

Further, the dual-mode electric drive system further includes a transmission housing, and the first gear transmission structure and the second gear transmission structure are both arranged in the transmission housing.

Further, the transmission housing includes a first transmission housing for accommodating the first gear transmission structure and a second transmission housing for accommodating the second gear transmission structure, and the first transmission housing and the second transmission housing are separately arranged and fixedly connected.

The advantageous effects of the dual-mode electric drive system of the present invention are as follows: The present invention improves the dual-mode electric drive system in the prior art. By providing the two motors and the gear transmission structures to facilitate power transmission, the power output from the two motors can be transmitted to the output end, thereby driving the wheels to rotate through the half shafts and differential. By providing the clutch between the first motor and the output end or between the second motor and the output end, the first motor or the second motor can be selectively engaged with the dual-mode electric drive system. When a vehicle is in an operating condition of a lower power demand, one of the motors can be disengaged from the dual-mode electric drive system by means of the clutch, so that only one motor is used for driving, which helps to keep the motor at relatively high output power and keep high efficiency of the motor, thus solving the problem in the prior art that both motors in a dual-motor electric drive system outputting power leads to low output power of every single motor, and accordingly the low output power of the two motors leads to a decrease in motor efficiency when the vehicle is in an operating condition of a lower power demand.

To achieve the above objective, the vehicle of the present invention adopts the following technical solution:

A vehicle includes an electric drive system. The electric drive system includes a first motor and a second motor. The first motor and the second motor are connected to an output end by means of gear transmission structures, and the output end includes two vehicle half shafts and a differential connected between the two vehicle half shafts. A clutch is provided between the first motor or the second motor and the output end so as to selectively engage the first motor or the second motor with the dual-mode electric drive system.

Further, the gear transmission structures include a first gear transmission structure connected to the first motor and a second gear transmission structure connected to the second motor. The first gear transmission structure includes a first output gear located at a tail end. The second gear transmission structure includes a second output gear located at a tail end. One of the first output gear and the second output gear is arranged on the vehicle half shaft, and the other is arranged on a housing of the differential.

Further, one of the first gear transmission structure and the second gear transmission structure is connected to the differential, and the other is provided with the clutch.

Further, the first motor and the second motor are both located on a front side or a rear side of the two vehicle half shafts.

Further, output shafts of the first motor and the second motor are arranged parallel to the vehicle half shafts.

Further, the first motor and the second motor are arranged coaxially.

Further, both the first gear transmission structure and the second gear transmission structure are of two-stage transmission.

Further, the dual-mode electric drive system further includes a transmission housing, and the first gear transmission structure and the second gear transmission structure are both arranged in the transmission housing.

Further, the transmission housing includes a first transmission housing for accommodating the first gear transmission structure and a second transmission housing for accommodating the second gear transmission structure, and the first transmission housing and the second transmission housing are separately arranged and fixedly connected.

The advantageous effects of the dual-mode electric drive system of the present invention are as follows: The present invention improves the vehicle in the prior art. By providing the two motors and the gear transmission structures to facilitate power transmission, the power output from the two motors can be transmitted to the output end, thereby driving the wheels to rotate through the half shafts and differential. By providing the clutch between the first motor and the output end or between the second motor and the output end, the first motor or the second motor can be selectively engaged with the dual-mode electric drive system. When a vehicle is in an operating condition of a lower power demand, one of the motors can be disengaged from the dual-mode electric drive system by means of the clutch, so that only one motor is used for driving, which helps to keep the motor at relatively high output power and keep high efficiency of the motor, thus solving the problem in the prior art that both motors in a dual-motor electric drive system outputting power leads to low output power of every single motor, and accordingly the low output power of the two motors leads to a decrease in motor efficiency when the vehicle is in an operating condition of a lower power demand.

### BRIEF DESCRIPTION OF THE DRAWINGS

FIG. 1 is a schematic structural diagram of an embodiment of a dual-mode electric drive system of the present invention; and
FIG. 2 is a schematic structural diagram of another implementation of the embodiment of the dual-mode electric drive system of the present invention.

In the figures: 1, clutch; 2, first motor; 3, first gear; 4, second gear; 5, first intermediate shaft; 6, third gear; 7, fourth gear; 8, first half shaft; 9, fifth gear; 10, differential; 11, second half shaft; 12, sixth gear; 13, second intermediate shaft; 14, seventh gear; 15, eighth gear; 16, second motor; 17, second output shaft; 18, first output shaft.

### DESCRIPTION OF THE EMBODIMENTS

The following provides a more detailed description of the features and performance of the present invention in conjunction with the embodiments.

In the present invention, a clutch is provided between a first motor or a second motor and an output end so as to selectively engage the first motor or the second motor with a dual-mode electric drive system.

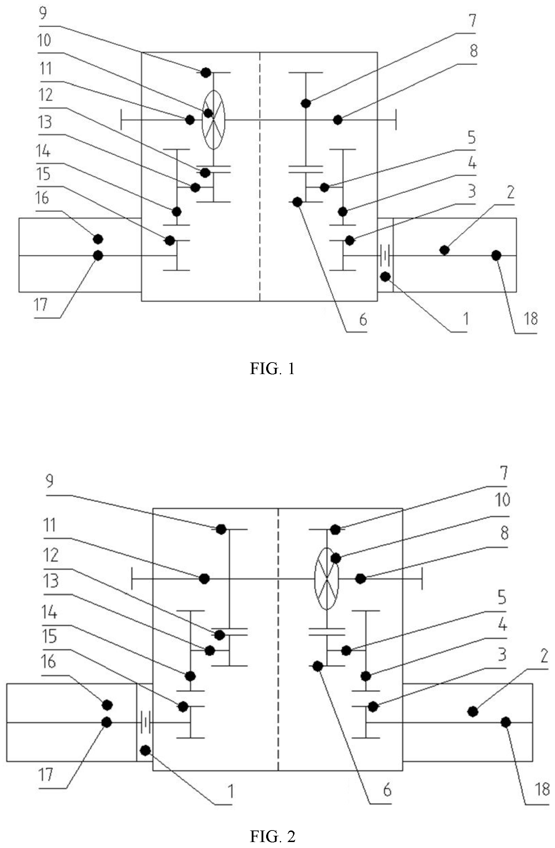

In Embodiment 1 of a dual-mode electric drive system of the present invention:
As shown in FIG. 1, in this embodiment, the dual-mode electric drive system includes a first motor 2 and a second motor 16, and further includes two vehicle half shafts for driving wheels to rotate. Specifically, the two vehicle half shafts are a first half shaft 8 and a second half shaft 11. A differential 10 is provided between the first half shaft 8 and the second half shaft 11, so that the first half shaft 8 and the second half shaft 11 can rotate at different speeds. The first half shaft 8, the second half shaft 11, and the differential 10 constitute an output end of the dual-mode electric drive system. A first gear transmission structure including gears is provided between the first motor 2 and the output end, and a second gear transmission structure including gears is provided between the second motor 16 and the output end.

As shown in FIG. 1, the first gear transmission structure includes two-stage transmission gears, specifically including a first gear 3, a second gear 4, a third gear 6, and a fourth gear 7. The second gear 4 and the third gear 6 are arranged coaxially and are both fixedly arranged on a first intermediate shaft 5. When the first motor 2 rotates, power is transmitted to the first gear 3 by means of a first output shaft 18 of the first motor 2. The first gear 3 meshes with the second gear 4, thereby transmitting power to the second gear 4. Since the second gear 4 and the third gear 6 are arranged coaxially, the second gear 4 and the third gear 6 rotate at the same speed. The third gear 6 then transmits power to the fourth gear 7 through meshing. The fourth gear 7 constitutes a tail end gear of the first gear transmission structure, i.e., a first output gear. For convenient power output of the first gear transmission structure, the fourth gear 7 is fixedly arranged on the first half shaft 8. As the fourth gear 7 rotates, it drives the first half shaft 8 to rotate, thereby allowing the first motor 2 to transmit power and speed to the output end by means of the first gear transmission structure. It is noteworthy that the two-stage transmission gears in the first gear transmission structure are all of reduction outputs, which facilitates reducing the speed and increasing the torque of the motor output, thereby providing greater torque. Of course, in other implementations, the first gear transmission structure may alternatively be of three-stage transmission or single-stage transmission.

As shown in FIG. 1, the second gear transmission structure also includes two-stage transmission gears, specifically including an eighth gear 15, a seventh gear 14, a sixth gear 12, and a fifth gear 9. The sixth gear 12 and the seventh gear 14 are arranged coaxially and are both fixedly arranged on a second intermediate shaft 13, enabling the sixth gear 12 and the seventh gear 14 to rotate synchronously. When the second motor 16 rotates, power is first transmitted to the eighth gear 15 by means of a second output shaft 17 of the second motor 16. Then, through the meshing of the eighth gear 15 and the seventh gear 14, power and speed are transmitted to the seventh gear 14. Through the action of the second intermediate shaft 13, power and speed are transmitted to the sixth gear 12, and the sixth gear 12 then transmits power and speed to the fifth gear 9 through gear meshing. The fifth gear 9 constitutes a tail end gear of the second gear transmission structure, i.e., a second output gear. For convenient power output of the second gear transmission structure, the fifth gear 9 is fixedly arranged on a housing of the differential 10, thereby driving the housing of the differential 10 to rotate. As the differential 10 is located between the first half shaft 8 and the second half shaft 11, power can be distributed to the first half shaft 8 and the second half shaft 11 by means of the differential 10. Of course, in other implementations, the second gear transmission structure may alternatively be of three-stage transmission or single-stage transmission.

To ensure that the two motors are not both engaged with the dual-mode electric drive system in case of a low power demand of the vehicle, a clutch 1 is provided at the output end of the first motor 2. The clutch 1 can selectively output power. That is, the first motor 2 can be engaged with the dual-mode electric drive system, so that both of the two motors in the dual-mode electric drive system operate simultaneously. Of course, the first motor can also be disengaged from the dual-mode electric drive system, so that only the second motor 16 in the dual-mode electric drive system outputs power.

Alternatively, in other implementations, the clutch 1 may also be provided inside the first gear transmission structure, such as between the second gear 4 and the third gear 6, so that the first motor 2 can be independent of the dual-mode electric drive system. In other implementations, as shown in FIG. 2, the clutch 1 may also be provided between the second motor 16 and the second gear transmission structure, or between the sixth gear 12 and the seventh gear 14 of the second gear transmission structure. Alternatively, in other implementations, as shown in FIG. 2, the differential 10 may also be fixed with the fourth gear 7. In this case, the fifth gear 9 is fixedly connected to the second half shaft 11. In other implementations, the first gear transmission structure and the second gear transmission structure may not be provided separately. Instead, a planetary gear set connected to the first motor 2 and the second motor 16 may be provided. The first motor 2 and the second motor 16 serve as two inputs of the planetary gear set, and the planetary gear set merges the power of the two motors and outputs the power to the output end.

The first gear transmission structure and the second gear transmission structure have a large number of gears therein. The gears require cooling and lubrication during operation. Therefore, the dual-mode electric drive system is further provided with a transmission housing for accommodating the gear transmission structures. The first gear transmission structure and the second gear transmission structure are both arranged in the transmission housing, and structures for lubricating and cooling the gears and collecting a coolant are provided in the gear transmission structures. In order to simplify the arrangement of the transmission housing, the transmission housing is integrally formed to simultaneously accommodate the first gear transmission structure and the second gear transmission structure inside. In other implementations, the transmission housing may also be divided into a first transmission housing for accommodating the first gear transmission structure and a second transmission housing for accommodating the second gear transmission structure. The first transmission housing and the second transmission housing are separately arranged and finally fixed together by means of bolts or welding.

As shown in FIG. 1, the first gear transmission structure and the second gear transmission structure are arranged on a same side of the vehicle half shafts. Correspondingly, the first motor 2 and the second motor 16 are also arranged on a same side of the vehicle half shafts. The first gear transmission structure and the second gear transmission structure have a same transmission ratio and a same size, thereby facilitating symmetrical arrangement. The first motor 2 and the second motor 16 also have the same specifications. The gears in the gear transmission structures are spur gears or helical gears. The first gear transmission structure and the second gear transmission structure are both parallel-shaft gear transmission structures. Correspondingly, the output shafts of the first motor 2 and the second motor 16 are arranged parallel to the vehicle half shafts. Since the first motor 2 is the same as the second motor 16 and the first gear transmission structure is the same as the second gear transmission structure, the positions of the first motor 2 and the second motor 16 relative to the vehicle half shafts are also the same. In this case, the first motor 2 and the second motor 16 are arranged coaxially.

In other implementations, the first gear transmission structure and the second gear transmission structure may also have different transmission ratios and different sizes, and the first motor 2 and the second motor 16 may also have different specifications. In this case, the first motor 2 and the second motor 16 are not arranged coaxially. In other implementations, the gears may also be bevel gears. In this case, the output shafts of the motors are not parallel to the vehicle half shafts but remain perpendicular to the vehicle half shafts.

When the vehicle is in an operating condition with a low power and torque demand, such as slow starting, gradual acceleration, or climbing gentle slopes, or when the vehicle is braking at low or medium speed with low regenerative power and torque, or when the vehicle is cruising at high speed with low power, the clutch 1 is disengaged so that only the second motor 16 in the dual-mode electric drive system can output power. In this case, the first motor 2 is independent of the dual-mode electric drive system. When the vehicle is in an operating condition with a high power and torque demand, such as high-speed traveling, rapid acceleration, or climbing steep slopes, or when the vehicle is braking at high speed with high power or braking in emergency with high torque, or when the vehicle is cruising at high speed with medium or high power, since the power demand is high, the clutch 1 is engaged. In this case, both the first motor 2 and the second motor 16 can output power. It is noteworthy that when the clutch 1 is engaged, the output shaft of the first motor 2 and the first half shaft 8 maintain a fixed speed ratio during power transmission. In this case, the first motor 2 can precisely control the first half shaft 8.

In the embodiment of the vehicle in the present invention, the vehicle in this embodiment includes an electric drive system. The electric drive system has the same structure as that of the dual-mode electric drive system described above, and will not be repeated here.

The foregoing is only a preferred embodiment of the present invention and is not intended to limit the present invention. The scope of patent protection of the present invention shall be subject to the claims. Any equivalent structural changes made based on the description and accompanying drawings of the present invention shall also fall within the scope of protection of the present invention.

## Claims

1. A dual-mode electric drive system, comprising a first motor and a second motor, the first motor and the second motor being connected to an output end by means of gear transmission structures, and the output end comprising two vehicle half shafts and a differential connected between the two vehicle half shafts, wherein a clutch is provided between the first motor or the second motor and the output end so as to selectively engage the first motor or the second motor with the dual-mode electric drive system.

2. The dual-mode electric drive system according to claim 1, wherein the gear transmission structures comprise a first gear transmission structure connected to the first motor and a second gear transmission structure connected to the second motor, the first gear transmission structure comprises a first output gear located at a tail end, the second gear transmission structure comprises a second output gear located at a tail end, one of the first output gear and the second output gear is arranged on the vehicle half shaft, and the other is arranged on a housing of the differential.

3. The dual-mode electric drive system according to claim 2, wherein one of the first gear transmission structure and the second gear transmission structure is connected to the differential, and the other is provided with the clutch.

4. The dual-mode electric drive system according to any one of claims 1 to 3, wherein the first motor and the second motor are both located on a front side or a rear side of the two vehicle half shafts.

5. The dual-mode electric drive system according to claim 4, wherein output shafts of the first motor and the second motor are arranged parallel to the vehicle half shafts.

6. The dual-mode electric drive system according to claim 5, wherein the first motor and the second motor are arranged coaxially.

7. The dual-mode electric drive system according to claim 2 or 3, wherein both the first gear transmission structure and the second gear transmission structure are of two-stage transmission.

8. The dual-mode electric drive system according to claim 2 or 3, wherein the dual-mode electric drive system further comprises a transmission housing, and the first gear transmission structure and the second gear transmission structure are both arranged in the transmission housing.

9. The dual-mode electric drive system according to claim 8, wherein the transmission housing comprises a first transmission housing for accommodating the first gear transmission structure and a second transmission housing for accommodating the second gear transmission structure, and the first transmission housing and the second transmission housing are separately arranged and fixedly connected.

10. A vehicle, comprising an electric drive system, wherein the electric drive system is the same as the dual-mode electric drive system according to any one of claims 1 to 9.
